# EUROPEAN PATENT SPECIFICATION

(11) **EP 2 711 244 B1**
(45) Date of publication and mention of the grant of the patent: **21.06.2017**
(21) Application number: 12786770.3
(22) Date of filing: 15.05.2012
(51) Int. Cl.: B60Q 1/24

(54) **SYSTEM AND METHOD FOR CONTROLLING THE OPERATION OF AUTOMOTIVE LAMPS**
SYSTEM UND VERFAHREN ZUR STEUERUNG DES BETRIEBS VON AUTOMOBILLAMPEN
SYSTÈME ET PROCÉDÉ PERMETTANT DE COMMANDER LE FONCTIONNEMENT DES LUMIÈRES D'ÉCLAIRAGE D'UNE AUTOMOBILE

(30) Priority: 19.05.2011 KR 20110047412
(43) Date of publication of application: 26.03.2014
(73) Proprietor: Continental Automotive GmbH, 30165 Hannover (DE)
(72) Inventor: KIM, Do Hyung, Icheon-si Gyeonggi-do 467-741 (KR)
(86) International application number: PCT/KR2012/003785
(87) International publication number: WO 2012/157934

(56) References cited:
- EP-A2- 0 965 710
- WO-A1-2008/000795
- DE-A1-102007 023 261
- JP-A- 2002 211 311
- JP-A- 2008 149 784
- JP-A- 2009 057 014
- JP-A- 2009 179 998
- KR-A- 20070 120 436
- KR-A- 20100 022 755
- US-A1- 2007 030 136

## Description

### Technical Field

The present invention relates to a solution to control the operation of automotive lamps, and more specifically to a system and method for controlling the operation of automotive lamps, which recognizes peripheral environment and obstacles near an automobile and performs welcome light searching based on such a recognition, thus minimizing the consumption of power caused by a welcome light system of the automobile.

### Background Technology

With the development of automobile technologies, more and more electronic features such as smart key (including FOB key) are available to deliver more convenient driving experience. Welcome light is one of such features provided for luxury automobiles.

When a driver carrying a smart key approaches an automobile after a certain period of leave, the welcome light system will turn on an interior lamp or puddle lamp of the automobile to ensure safe approach of the driver. In addition, when the driver leaves and stays far away from the automobile, the welcome light system turns off the interior lamp or puddle lamp for safe parking.

Under certain conditions, the welcome light system controls the low frequency (LF) antenna mounted on the automobile together with a smart key. The LF antenna periodically transmits LF signals. When a smart key transmits a response signal to said LF signals, the welcome light system turns on the lamp.

However, the conventional welcome light systemperiodically senses a preset area regardless of peripheral environments. In other words, even if an automobile parks in a place with a wall on one side, the system will sense the areas on both driver-seat and passenger-seat sides. Sensing of unnecessary external areas will increase power consumption of the automobile.

EP 0 965 710 A2 discloses a vehicle control system that is able to accurately recognize an approaching user, wherein excessive detection operations are suppressed to reduce battery consumption. Control is performed at an optimum timing as desired by a user. The vehicle has a controller for forming a large area, using low power electromagnetic radiation. Within the large area, a large area ID request signal can be received. When a portable transceiver enters the large area and returns a response ID in reply to the large area ID request signal back to the controller of the vehicle, the controller then forms a plurality of small areas in which a small area ID request signal for detailed detection can be received. When it is confirmed that the portable transceiver entered any of the small areas, the controller unlocks the vehicle door associated with that small area, allowing the user to enter the vehicle.

JP 2002 211311 A discloses a lighting system for a vehicle, wherein, when an identification signal is received for controlling turning on a door mirror lamp, in order to lighten more appropriately for an owner of the vehicle for enhancing usefulness for the owner and to prevent wasteful lighting for reducing battery consumption to the minimum, when the identification signal is received, turning-on of the door mirror lamp is controlled according to actions regarding the owner's approaching to or departing from the vehicle, including the owner's approaching direction and speed to the vehicle and distance between the owner and the vehicle.

### Detailed Description of the Invention

### Problem to Be Solved

To solve the aforesaid problem, the present invention collects peripheral environmental data for the current position of an automobile upon the occurrence of an event and through one or more sensing devices with which the automobile is provided; then, the present invention determines the position of an obstacle adjacent to the automobile on the basis of the peripheral environmental data, designates a driver search area in consideration of the determined position of the obstacle, and senses an approach of a driver by sensing a smart key carried by the driver in the designated driver search area; if an approach of the driver is sensed in the designated driver search area, turns on the automotive lamps. With the system and method of the present invention, a parking environment and obstacles existing near the automobile may be recognized and welcome light searching may be performed in an efficient manner on the basis of such a recognition, thus minimizing the consumption of power caused by a welcome light system of the automobile

### Solution to the Problem

To achieve said purpose, the present invention proposes a system for controlling the operation of automotive lamps, which is characterized in that, said system comprises: a data collection unit, which collects peripheral environmental data for the current position of an automobile upon the occurrence of an event and through one or more sensing devices with which the automobile is provided; a driver-sensing unit which determines the position of an obstacle adjacent to the automobile on the basis of the peripheral environmental data, designates a driver search area in consideration of the determined position of the obstacle, and senses an approach of a driver by sensing a smart key carried by the driver in the designated driver search area; and an automotive lamp control unit which, if an approach of the driver is sensed in the designated driver search area, turns on the automotive lamps, wherein said driver-sensing unit determines whether obstacles exist in more than one preset areas on the basis of said collected peripheral environmental data, and wherein said driver-sensing unit designates the preset area without obstacles as the driver search area. Said data collection unit is characterized in that it collects said peripheral environmental data upon the occurrence of an event if no smart key of the driver is sensed in the automobile.

Said data collection unit is characterized in that at least one sensing device from a parking sensor, camera, ultrasound sensor, or automatic parking device is preferably chosen to collect said peripheral environmental data.

Another aspect of the present invention is to propose a method for controlling the operation of automotive lamps, which is characterized in that, said method comprises the following steps: the step at which saidperipheral environmental data for the current position of an automobile is collected upon the occurrence of an event and through one or more sensing devices with which the automobile is provided; the step at which the position of an obstacle adjacent to the automobile is determined on the basis of said peripheral environmental data, and a driver search area is designated in consideration of the determined position of the obstacle; the step at which an approach of a driver is sensed by sensing a smart key carried by the driver in the designated driver search area; and the step at which automotive lamps are turned on if an approach of the driver is sensed in said designated driver search area, wherein, at said driver search area designation step, whether obstacles exist in more than one preset areas is determined on the basis of said collected peripheral environmental data, and wherein, at said driver search area designation step, an area without obstacles is designated as the driver search area out of said multiple preset areas. Said data collection step is characterized in that said peripheral environmental data is collected upon the occurrence of said event if no smart key of the driver is sensed in the automobile.

Said data collection step is characterized in that at least one sensing device from a parking sensor, camera, ultrasound sensor, or automatic parking device is preferably chosen to collect said peripheral environmental data.

### Effect of the Invention

With the system and method of the present invention, a parking environment and obstacles existing near the automobile may be recognized and welcome light searching may be performed in an efficient manner on the basis of such a recognition, thus avoiding sensing of unnecessary areas outside an automobile and minimizing the consumption of power caused by a welcome light system of the automobile.

### Brief Introduction to the Drawings

The drawings attached to the specification aim to illustrate the preferred embodiments of the present invention, and help explain technical spirit of the invention together with detailed description of the invention. However, it should be understood that the scope of the present invention is not limited to situations illustrated by such drawings.
Fig. 1 is a structural diagram of the system for controlling the operation of automotive lamps related to a preferred embodiment of the present invention.
Fig. 2 is a simplified flowchart of the method for controlling the operation of automotive lamps related to a preferred embodiment of the present invention.

### Preferred Embodiments of the Invention

To fully understand the purpose to be achieved by the implementation of the present invention and the benefits of the present invention, you should refer to the information contained in the drawings and the accompanying drawings which illustrate a preferred embodiment of the present invention.

A detailed description of the preferred embodiment of the system for controlling the operation of automotive lamps related to the present invention is given below with reference to the accompanying drawings.

A description of the preferred embodiment of the present invention is given below with reference to the accompanying drawings.

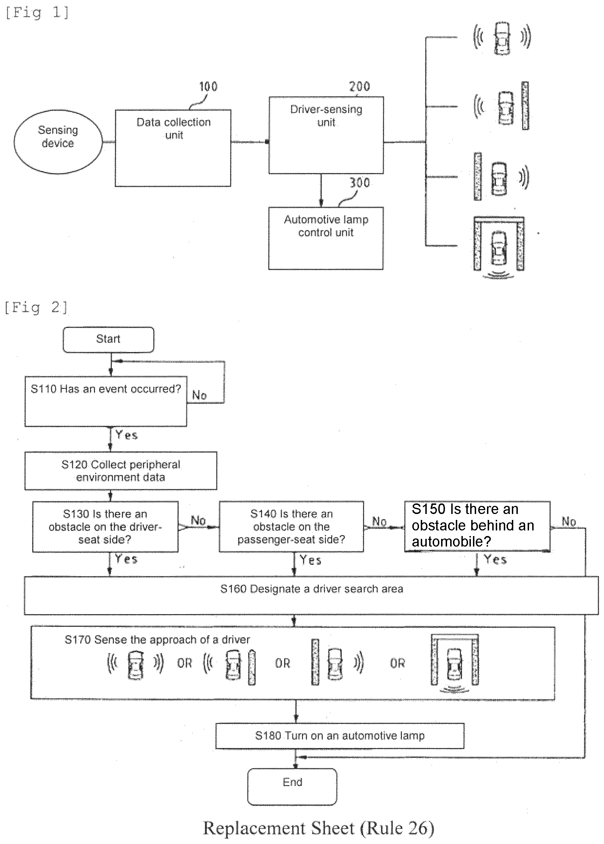

Fig. 1 is a structural diagram of the system for controlling the operation of automotive lamps related to a preferred embodiment of the present invention.

As shown in Fig. 1, said system comprises: a data collection unit (100), which collects peripheral environmental data for the current position of an automobile; a driver-sensing unit (200), which designates a driver search area on the basis of said peripheral environmental data, and senses an approach of a driver in said designated driver search area; and an automotive lamp control unit (300), which turns on the automotive lamps if an approach of the driver is sensed in said designated driver search area.

Said data collection unit (100) collects peripheral environmental data for the current position of an automobile upon the occurrence of an event and through one or more sensing devices with which the automobile is provided. More specifically, the data collection unit (100) collects peripheral environmental data for the current position of an automobile upon the occurrence of an event in different cycles (1^{st} stage: perform searching for about 4 days at a cycle of 240 ms; 2^{nd} stage, perform searching for about 10 days at a cycle of 720 ms) set according to the parking duration of the automobile. When the data collection unit (100) fails to detect the smart key in the automobile upon the occurrence of an event, it collects peripheral environmental data to identify obstacles near the automobile through the sensing device with which the automobile is provided, which can be a parking sensor, camera, ultrasound sensor, or automatic parking device.

Said driver-sensing unit (200) designates a driver search area on the basis of said peripheral environmental data and in consideration of the determined position of the obstacle; more specifically, said driver-sensing unit (200) determines the position of an obstacle adjacent to the automobile on the basis of the peripheral environmental data. At this time, the driver-sensing unit (200) senses more than one preset areas, such as areas adjacent to the driver-seat side and passenger-seat side and behind an automobile, for obstacles, and designates the area without obstacles as the driver search area.

Then, the driver-sensing unit (200) senses an approach of the driver in said designated driver search area. More specifically, the driver-sensing unit (200) senses an approach of a driver by sensing a smart key carried by the driver in said designated driver search area. For example, if spaces on the drive-seat side and passenger-seat side of an automobile are open spaces, the driver-sensing unit (200) senses an approach of a driver on both sides. If the driver-seat side is close to a wall which prevents an approach of the driver, the driver-sensing unit senses an approach of the driver on the passenger-seat side and from the behind of an automobile. Likewise, if the passenger-seat side of an automobile is close to a wall, it senses an approach of the driver on the driver-seat side; if both passenger-seat side and driver-seat side are close to walls while the rear side is open space, it senses an approach of the driver from the behind of an automobile.

The automotive lamp control unit (300) turns on the automotive lamps if an approach of the driver is sensed in the driver search area. More specifically, the automotive lamp control unit (300) turns on the designated automotive lamp, for example, an interior lamp or the puddle lamp, if the smart key carried by a driver is sensed in the driver search area.

With the system for controlling the operation of automotive lamps as described in the preferred embodiment above, a parking environment and obstacles existing near the automobile may be recognized and welcome light searching may be performed in an efficient manner on the basis of such a recognition, thus avoiding sensing of unnecessary areas outside an automobile and minimizing the consumption of power caused by a welcome light system of the automobile.

A description of the preferred embodiment of the method for controlling the operation of automotive lamps is given below with reference to Fig. 2. For the convenience of description, numbers used in Fig. 1 are also adopted to refer to the same parts.

First, upon the occurrence of an event, one or more sensing devices with which the automobile is provided are used to collect the peripheral environmental data for the current position of an automobile (S110-S120). Preferably, the data collection unit (100) collects peripheral environmental data for the current position of an automobile upon the occurrence of an event in different cycles (1^{st} stage: perform searching for about 4 days at a cycle of 240 ms; 2^{nd} stage, perform searching for about 10 days at a cycle of 720 ms) set according to the parking duration of the automobile. When the data collection unit (100) fails to detect the smart key in the automobile upon the occurrence of an event, it collects peripheral environmental data to identify obstacles near the automobile through the sensing device with which the automobile is provided, which can be a parking sensor, camera, ultrasound sensor, or automatic parking device.

Then, a driver search area is designated on the basis of said peripheral environmental data and in consideration of the determined position of the obstacle (S130-S160). Preferably, said driver-sensing unit (200) determines the position of an obstacle adjacent to the automobile on the basis of the peripheral environmental data. At this time, the driver-sensing unit (200) senses more than one preset areas, such as areas adjacent to the driver-seat side and passenger-seat side and behind an automobile, for obstacles, and designates the area without obstacles as the driver search area.

Then, thedriver-sensingunit (200) senses an approach of the driver in said designated driver search area (S170). Preferably, the driver-sensing unit (200) senses an approach of a driver by sensing a smart key carried by the driver in said designated driver search area. For example, if spaces on the drive-seat side and passenger-seat side of an automobile are open spaces, the driver-sensing unit (200) senses an approach of a driver on both sides. If the driver-seat side is close to a wall which prevents an approach of the driver, the driver-sensing unit senses an approach of the driver on the passenger-seat side and from the behind of an automobile. Likewise, if the passenger-seat side of an automobile is close to a wall, it senses an approach of the driver on the driver-seat side; if both passenger-seat side and driver-seat side are close to walls while the rear side is open space, it senses an approach of the driver from the behind of an automobile.

Then, the automotive lamp control unit turns on the automotive lamps if an approach of a driver is sensed in said designated driver search area (S180). Preferably, the automotive lamp control unit (300) turns on the designated automotive lamp, for example, an interior lamp or the puddle lamp, if the smart key carried by a driver is sensed in the driver search area.

With the method for controlling the operation of automotive lamps as described in the preferred embodiment above, a parking environment and obstacles existing near the automobile may be recognized and welcome light searching may be performed in an efficient manner on the basis of such a recognition, thus avoiding sensing of unnecessary areas outside an automobile and minimizing the consumption of power caused by a welcome light system of the automobile.

Although the present invention has been fully described with reference to the preferred embodiment, the present invention is not limited to the aforementioned embodiment. It should be understood that various changes and modifications can be made by those skilled in the art without departing from the scope of the invention defined in the appended claims.

### Industrial Applicability

The system and method for controlling the operation of automotive lamps described in the present invention can recognize parking environment and obstacles around the automobile and perform effective welcome light searching on the basis of such recognition. The invention has broken the bottleneck of the prior art and is feasible for implementation and marketing. It is an invention of industrial applicability.

## Claims

1. A system for controlling the operation of automotive lamps, wherein said system comprises: a data collection unit (100), which collects peripheral environmental data for the current position of an automobile upon the occurrence of an event and through one or more sensing devices with which the automobile is provided; a driver-sensing unit (200) which determines the position of an obstacle adjacent to the automobile on the basis of the peripheral environmental data, designates a driver search area in consideration of the determined position of the obstacle, and senses an approach of a driver by sensing a smart key carried by the driver in the designated driver search area; and an automotive lamp control unit (300) which, if an approach of the driver is sensed in the designated driver search area, turns on the automotive lamps, wherein said driver-sensing unit (200) determines whether obstacles exist in more than one preset areas on the basis of said collected peripheral environmental data, **characterized in that** said driver-sensing unit (200) designates the preset area without obstacles as the driver search area.

2. The system for controlling the operation of automotive lamps as claimed in claim 1, **characterized in that**, said data collection unit (100) collects said peripheral environmental data upon the occurrence of an event if no smart key of the driver is sensed in the automobile.

3. The system for controlling the operation of automotive lamps as claimed in claim 2, **characterized in that**, said data collection unit (100) selects at least one sensing device from a parking sensor, camera, ultrasound sensor, or automatic parking device to collect said peripheral environmental data.

4. A method for controlling the operation of automotive lamps, which comprises the following steps: the step at which said peripheral environmental data for the current position of an automobile is collected upon the occurrence of an event and through one or more sensing devices with which the automobile is provided; the step at which the position of an obstacle adjacent to the automobile is determined on the basis of said peripheral environmental data, and a driver search area is designated in consideration of the determined position of the obstacle; the step at which an approach of a driver is sensed by sensing a smart key carried by the driver in the designated driver search area; and the step at which automotive lamps are turned on if an approach of the driver is sensed in said designated driver search area, wherein, at said driver search area designation step, whether obstacles exist in more than one preset areas is determined on the basis of said collected peripheral environmental data, **characterized in that**, at said driver search area designation step, an area without obstacles is designated as the driver search area out of said multiple preset areas.

5. The method for controlling the operation of automotive lamps as claimed in claim 4, **characterized in that**, at said data collection step, said peripheral environmental data is collected upon the occurrence of said event if no smart key of the driver is sensed in the automobile.

6. The method for controlling the operation of automotive lamps as claimed in claim 5, **characterized in that**, at said data collection step, at least one sensing device from a parking sensor, camera, ultrasound sensor, or automatic parking device is chosen to collect said peripheral environmental data.

## Patentansprüche

1. System zur Steuerung des Betriebs von Automobillampen, wobei das System aufweist: eine Datensammeleinheit (100), welche periphere Umgebungsdaten für die aktuelle Position eines Automobils beim Eintreten eines Ereignisses und durch eine oder mehrere Sensorvorrichtungen, mit denen das Automobil versehen ist, sammelt; eine Fahrer-Sensoreinheit (200), welche die Position eines dem Automobil benachbarten Hindernisses auf der Basis der peripheren Umgebungsdaten bestimmt, einen Fahrersuchbereich unter Berücksichtigung der bestimmten Position des Hindernisses festlegt und eine Annäherung eines Fahrers durch Erfassen eines vom Fahrer getragenen Smartkeys im festgelegten Fahrersuchbereich erfasst; und eine Automobillampen-Steuereinheit (300), welche, falls eine Annäherung des Fahrers im festgelegten Fahrersuchbereich erfasst wird, die Automobillampen einschaltet, wobei die Fahrer-Sensoreinheit (200) auf der Basis der gesammelten peripheren Umgebungsdaten bestimmt, ob Hindernisse in mehr als einem voreingestellten Bereich vorhanden sind, **dadurch gekennzeichnet, dass** die Fahrer-Sensoreinheit (200) den voreingestellten Bereich ohne Hindernisse als Fahrersuchbereich festlegt.

2. System zur Steuerung des Betriebs von Automobillampen nach Anspruch 1, **dadurch gekennzeichnet, dass** die Datensammeleinheit (100) die peripheren Umgebungsdaten beim Eintreten eines Ereignisses sammelt, falls kein Smartkey des Fahrers im Automobil erfasst wird.

3. System zur Steuerung des Betriebs von Automobillampen nach Anspruch 2, **dadurch gekennzeichnet, dass** die Datensammeleinheit (100) wenigstens eine Sensorvorrichtung aus einem Parksensor, einer Kamera, einem Ultraschallsensor oder einer automatischen Einparkvorrichtung auswählt, um die peripheren Umgebungsdaten zu sammeln.

4. Verfahren zur Steuerung des Betriebs von Automobillampen, welches die folgenden Schritte aufweist: den Schritt, in welchem die peripheren Umgebungsdaten für die aktuelle Position eines Automobils beim Eintreten eines Ereignisses und durch eine oder mehrere Sensorvorrichtungen, mit denen das Automobil versehen ist, gesammelt werden; den Schritt, in welchem die Position eines dem Automobil benachbarten Hindernisses auf der Basis der peripheren Umgebungsdaten bestimmt wird und ein Fahrersuchbereich unter Berücksichtigung der bestimmten Position des Hindernisses festgelegt wird; den Schritt, in welchem eine Annäherung eines Fahrers durch Erfassen eines vom Fahrer getragenen Smartkeys im festgelegten Fahrersuchbereich erfasst wird; und den Schritt, in welchem Automobillampen eingeschaltet werden, falls eine Annäherung des Fahrers im festgelegten Fahrersuchbereich erfasst wird, wobei im Schritt der Festlegung des Fahrersuchbereichs auf der Basis der gesammelten peripheren Umgebungsdaten bestimmt wird, ob Hindernisse in mehr als einem voreingestellten Bereich vorhanden sind, **dadurch gekennzeichnet, dass** im Schritt der Festlegung des Fahrersuchbereichs aus den mehreren voreingestellten Bereichen ein Bereich ohne Hindernisse als Fahrersuchbereich festgelegt wird.

5. Verfahren zur Steuerung des Betriebs von Automobillampen nach Anspruch 4, **dadurch gekennzeichnet, dass** im Schritt der Datensammlung die peripheren Umgebungsdaten beim Eintreten des Ereignisses gesammelt werden, falls kein Smartkey des Fahrers im Automobil erfasst wird.

6. Verfahren zur Steuerung des Betriebs von Automobillampen nach Anspruch 5, **dadurch gekennzeichnet, dass** im Schritt der Datensammlung wenigstens eine Sensorvorrichtung aus einem Parksensor, einer Kamera, einem Ultraschallsensor oder einer automatischen Einparkvorrichtung ausgewählt wird, um die peripheren Umgebungsdaten zu sammeln.

## Revendications

1. Système permettant de commander le fonctionnement de phares d'automobile, dans lequel ledit système comprend : une unité de collecte de données (100) qui collecte des données environnementales périphériques pour la position actuelle d'une automobile lorsqu'un événement survient et par le biais d'un ou plusieurs dispositifs de détection dont l'automobile est pourvue ; une unité de détection de conducteur (200) qui détermine la position d'un obstacle à côté de l'automobile sur la base des données environnementales périphériques, désigne une zone de recherche de conducteur en prenant en compte la position déterminée de l'obstacle et détecte l'approche d'un conducteur en détectant une clé intelligente portée par le conducteur dans la zone de recherche de conducteur désignée ; et une unité de commande de phare d'automobile (300) qui, si une approche du conducteur est détectée dans la zone de recherche de conducteur désignée, allume les phares d'automobile, dans lequel ladite unité de détection de conducteur (200) détermine si oui ou non des obstacles existent dans plus d'une des zones prédéfinies sur la base desdites données environnementales périphériques collectées, **caractérisé en ce que** ladite unité de détection de conducteur (200) désigne la zone prédéfinie sans obstacle comme la zone de recherche de conducteur.

2. Système permettant de commander le fonctionnement de phares d'automobile selon la revendication 1, **caractérisé en ce que** ladite unité de collecte de données (100) collecte lesdites données environnementales périphériques lorsqu'un événement survient si aucune clé intelligente du conducteur n'est détectée dans l'automobile.

3. Système permettant de commander le fonctionnement de phares d'automobile selon la revendication 2, **caractérisé en ce que** ladite unité de collecte de données (100) sélectionne au moins un dispositif de détection parmi un capteur de stationnement, une caméra, un capteur d'ultrason ou un dispositif de stationnement automatique pour collecter lesdites données environnementales périphériques.

4. Procédé permettant de commander le fonctionnement de phares d'automobile, comprenant les étapes suivantes : l'étape à laquelle lesdites données environnementales périphériques correspondant à la position actuelle d'une automobile sont collectées lorsqu'un événement survient et au travers d'un ou plusieurs dispositifs de détection dont l'automobile est pourvue ; l'étape à laquelle la position d'un obstacle à côté de l'automobile est déterminée sur la base desdites données environnementales périphériques et à laquelle une zone de recherche de conducteur est désignée en prenant en compte la position déterminée de l'obstacle ; l'étape à laquelle une approche d'un conducteur est détectée par détection d'une clé intelligente portée par le conducteur dans la zone de recherche de conducteur désignée ; et l'étape à laquelle des phares d'automobile sont allumés si une approche du conducteur est détectée dans ladite zone de recherche de conducteur désignée dans laquelle à ladite étape de désignation de zone de recherche de conducteur, on détermine si oui ou non des obstacles existent dans plus d'une des zones prédéfinies sur la base desdites données environnementales périphériques collectées, **caractérisé en ce qu'**à ladite étape de désignation de zone de recherche de conducteur, une zone sans obstacle est désignée comme la zone de recherche de conducteur à partir desdites zones prédéfinies multiples.

5. Procédé permettant de commander le fonctionnement de phares d'automobile selon la revendication 4, **caractérisé en ce qu'**à ladite étape de collecte de données, lesdites données environnementales périphériques sont collectées lorsque ledit événement se produit si aucune clé intelligente du conducteur n'est détectée dans l'automobile.

6. Procédé permettant de commander le fonctionnement de phares d'automobile selon la revendication 5, **caractérisé en ce qu'**à ladite étape de collecte de données, au moins un dispositif de détection parmi un capteur de stationnement, une caméra, un capteur d'ultrason ou un dispositif de stationnement automatique est choisi pour collecter lesdites données environnementales périphériques.
